# EUROPÄISCHE PATENTSCHRIFT

(11) **EP 0 688 919 B1**
(45) Veröffentlichungstag und Bekanntmachung des Hinweises auf die Patenterteilung: **22.04.1998**
(21) Anmeldenummer: 95109319.4
(22) Anmeldetag: 16.06.1995
(51) Int. Cl.: E04F 11/18, F16B 7/02, B60N 3/02, B62D 33/04

(54) **Bausatz, insbesondere für Busse**
Construction assembly, in particular for buses
Assemblage de construction, notamment pour les autobus

(30) Priorität: 24.06.1994 DE 4422211; 03.02.1995 DE 19503532; 22.10.1994 DE 4437843
(43) Veröffentlichungstag der Anmeldung: 27.12.1995
(73) Patentinhaber: HAPPICH Fahrzeug- und Industrieteile GmbH, 42285 Wuppertal (DE); EvoBus GmbH, 70567 Stuttgart (DE)
(72) Erfinder: Poffo, Hans-Joachim, D-42285 Wuppertal (DE); Brodka, Johann, D-89250 Senden (DE); Bollmann, Rainer, D-42111 Wuppertal (DE); Marx, Alfred, D-89129 Öllingen (DE)

(56) Entgegenhaltungen:
- AU-B- 511 869
- DD-C- 299 202
- DE-A- 2 427 242
- DE-A- 4 030 978
- FR-A- 2 295 284
- US-A- 3 787 131

## Beschreibung

Die Erfindung bezieht sich auf einen Bausatz, insbesondere für Busse, mit aus abgelängten Rohrabschnitten gleichen Durchmessers bestehenden Haltestangen, Handlaufstangen, Handlaufstützen und Verbindungsstangen, Verbindungselementen zum Befestigen der Haltestangen an karosseriefesten Bereichen, wie Boden, Schweißflansch oder dgl. und Verbindungselementen zum Befestigen der Stangen aneinander.

Für die Befestigung von Haltestangen, Handlaufstangen, Handlaufstützen und dgl. in Bussen wurden bisher Verbindungselemente in Muffenform und/oder in Form von Rohrschellen eingesetzt. Verbindungselemente dieser Art sind relativ voluminös und stören das optische Erscheinungsbild des der Sicherheit von Fahrgästen dienenden Haltestangensystems. Die Dokumenten DE 82 09 178 U1, DE 79 23 561 Ul und DE 16 11 214 U1 zeigen lediglich Einzelheiten solcher Systeme.

Die DD 299 202 A5 zeigt eine Vorrichtung zur Befestigung eines insbesondere rohrförmigen Bauteils an einer Wand oder dgl. Dabei ist ein Verbindungselement zur bodenseitigen Befestigung eines rohrförmigen Bauteils vorgesehen, das aus einem flanschartigen Baukörper besteht, der einstückig mit einem dübelartigen Zapfen ausgebildet ist. Der dübelartige Zapfen ist dem Öffnungsquerschnitt des rohrförmigen Bauteils angepaßt und mit einer sich axial erstreckenden konischen Öffnung ausgebildet, in die mittels einer Schraube ein konisches Spannelement einziehbar ist. Eine ähnliche Vorrichtung ist in der DE 40 30 978 Al gezeigt, wobei es allerdings um die Verbindung von rohrförmigen Bauteilen aneinander oder um die Verbindung von rohrförmigen Bauteilen mit Bogen- oder Knotenelementen geht.

Das Dokument DE 87 03 940 U1 zeigt eine Gelenkverbindung für Rohre. Dabei ist ein Formkörper mit zwei radial geteilten Formkörperhälften vorgesehen, die im montierten Zustand einen Zylinderkörper ergeben mit einem den Rohren entsprechenden Außendurchmesser. Der Zylinderkörper ist zudem mit Anschlußaufnahmen zum formschlüssigen Eingriff von Halteteilen ausgebildet. Die Rohre weisen ferner einen mittigen, längsverlaufenden Kanal mit einem durchgehenden Längsschlitz auf.

Die DE 19 05 625 Al zeigt ein Verbindungsglied, bei dem ein mehrteiliger Formkörper zum Anschluß von Verbindungselementen hohl ausgebildet ist und bei dem die Zugangsöffnung durch ein Abdeckelement verschließbar ist.

Es ist in erster Linie Aufgabe der vorliegenden Erfindung einen Bausatz der eingangs genannten Art zur Verfügung zu stellen, der den technischen Anforderungen genügt, mit nur wenigen Standardteilen auskommt und darüber hinaus den ästhetischen Ansprüchen gerecht wird.

Für die Lösung dieser Aufgabe sind erfindungsgemäß die im Patentanspruch 1 angegebenen Maßnahmen vorgesehen. Die Unteransprüche geben vorteilhafte Weiterbildungen und zweckmäßige Ausgestaltungen der Erfindung an.

Ein besonderer Vorteil der im Anspruch 2 angegebenen Maßnahme wird darin gesehen, daß die Verbindungselemente dübelartig in die Enden der Haltestangen, Handlaufstangen, Handlaufstützen und Verbindungsstangen einsteckbar und hier von innen nach außen radial aufspreizbar und dabei den Blicken von Betrachtern entzogen sind. Die Erfindung ermöglicht damit den Einsatz von Verbindungselementen deren Außendurchmesser, soweit sichtbar, dem Außendurchmesser der aus abgelängten Rohrabschnitten bestehenden Haltestangen, Handlaufstangen, Handlaufstützen und Verbindungsstangen entspricht.

Die Ausführungsform der Erfindung nach Anspruch 3 kommt ohne ein konisches Spannelement aus. Dieser Vorteil muß zwar durch eine aufwendigere Gestaltung der Stangen erkauft werden, was aber nicht wesentlich ist, wenn man bedenkt, daß die aus Rohrabschnitten bestehenden Stangen ohnehin als Strangpreßprofile, in der Regel Aluminiumstrangpreßprofile ausgeführt werden. Andererseits kann durch eine innere Verrippung der Stangen die Biegefestigkeit derselben erhöht und daher die Wandstärke entsprechend verringert werden.

Ausführungsbeispiele der Erfindung werden nachfolgend anhand der Zeichnungen näher erläutert, und es zeigen:
- Fig. 1: eine Seitenansicht von mehreren Haltestangen und damit verbundenen Handlaufstangen,
- Fig. 2: eine Stirnansicht von Fig. 1 mit zusätzlich dargestellter Handlaufstütze und Trennwand,
- Fig. 3: eine Stirnansicht von Fig. 1 in einer gegenüber Fig. 2 abgewandelten Ausführungsform,
- Fig. 4: ein an einer Haltestange angeordnetes Verbindungselement zur bodenseitigen Befestigung der Haltestange im Schnitt,
- Fig. 5: eine Draufsicht auf das Verbindungselement nach Fig. 4,
- Fig. 6: ein an einer Haltestange angeordnetes Verbindungselement zur Herstellung einer T-förmigen Verbindung zwischen einer Haltestange und einer Handlaufstange,
- Fig. 7: einen Schnitt durch den Verbindungsbereich nach Fig. 6,
- Fig. 8: eine kreuzförmige Verbindung mit zwei an einer Haltestange befestigten Handlaufstangen,
- Fig. 9: ein Verbindungselement in Form eines 90 °-Eckstücks,
- Fig. 10: einen Schnitt X - X nach Fig. 9,
- Fig. 11: ein Verbindungselement nach Fig. 9 mit einem daran angeschlossenen weiteren Verbindungselement in Form eines 45 °-Eckstücks,
- Fig. 12: das 45 °-Eckstück nach Fig. 11 in einer gegenüber Fig. 11 um 90 ° gedrehten Ansicht,
- Fig. 13: ein Verbindungselement in Form eines 90 °-Eckstücks mit einem Adapterelement,
- Fig. 14: das Adapterelement nach Fig. 13 im Horizontalschnitt,
- Fig. 15: eine gegenüber Fig. 4 abgewandelte Ausführungsform eines an einer Haltestange angeordneten Verbindungselements zur bodenseitigen Befestigung einer Haltestange im Schnitt,
- Fig. 16: eine Draufsicht auf das Verbindungselement nach Fig. 15,
- Fig. 17: eine gegenüber Fig. 6 abgewandelte Ausführungsform eines an einer Haltestange angeordneten Verbindungselements zur Herstellung einer T-förmigen Verbindung zwischen einer Haltestange und einer Handlaufstange,
- Fig. 18: eine gegenüber Fig. 8 abgewandelte Ausführungsform einer kreuzförmigen Verbindung mit zwei an einer Haltestange befestigten Handlaufstangen,
- Fig. 19: eine gegenüber Fig. 9 abgewandelte Ausführungsform eines Verbindungselements in Form eines 90°-Eckstücks,
- Fig. 20: ein Verbindungselement nach Fig. 19 mit einem daran angeschlossenen weiteren Verbindungselement in Form eines 45°-Eckstücks,
- Fig. 21: ein gegenüber Fig. 13 abgewandeltes Verbindungselement in Form eines 90°-Eckstücks mit einem Adapterelement,
- Fig. 22: einen Stangenquerschnitt gemäß einer ersten Ausführungsform,
- Fig. 23: einen Stangenquerschnitt gemäß einer zweiten Ausführungsform,
- Fig. 24: einen Stangenquerschnitt gemäß einer dritten Ausführungsform,
- Fig. 25: ein Eckverbindungselement mit hinterleuchteter Abdeckung und
- Fig. 26: ein Eckverbindungselement mit hinterleuchteter Abdeckung und Haltewunschtaste.

Im Innenraumbereich eines nicht näher dargestellten Busses sind in Reihen nebeneinander senkrecht ausgerichtete Haltestangen 1 zwischen dem Boden 2 und der nichtgezeigten Decke befestigt. An den Haltestangen 1 sind diese miteinander verbindende Handlaufstangen 3 in waagerechter Ausrichtung angeordnet. Handlaufstützen 4, Verbindungsstangen 5, 6 und Trennwände 7 runden das Gesamtsystem ab. Die einzelnen Stangen bestehen aus abgelängten Rohren, die über Verbindungselemente aneinander festgelegt sind.

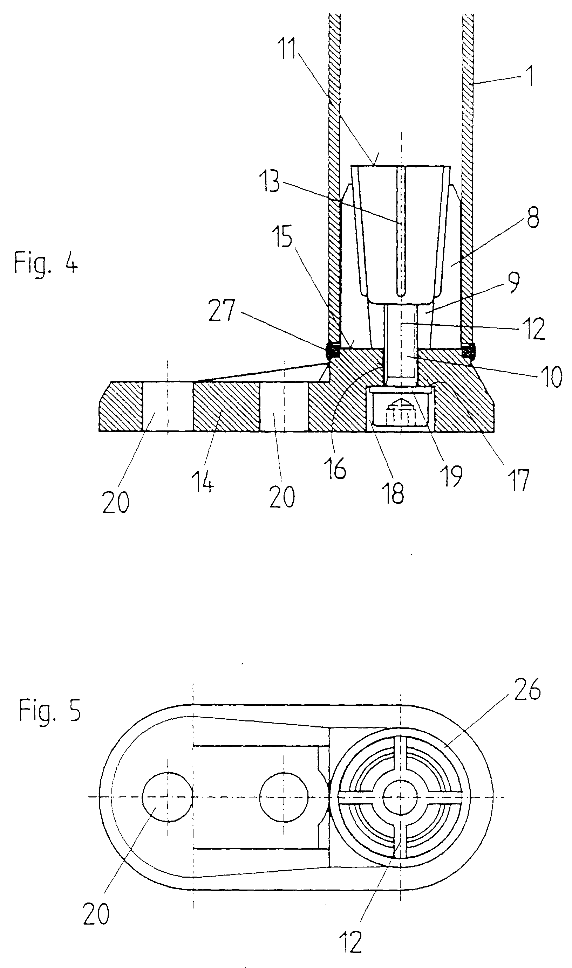

Die einzelnen noch näher zu beschreibenden, in Fig. 4 bis 13 gezeigten Verbindungselemente haben miteinander gemeinsam, daß sie zumindest einen dem Öffnungsquerschnitt der Stangen angepaßten dübelartigen Zapfen 8 aufweisen, der in ein jeweiliges Stangenende einsetzbar und verankerbar ist. Der dübelartige Zapfen 8 ist mit einer sich axial erstreckenden konischen Öffnung 9 ausgebildet, in die mittels einer Schraube 10 ein konisches Spannelement 11 einziehbar ist. Durch Einziehen des Spannelements 11 in die Öffnung 9 des dübelartigen Zapfens 8 wird dieser gespreizt und gegen die Innenwandung der jeweiligen Stange gepreßt. Der dübelartige Zapfen 8 weist zumindest einen radialen Längsschlitz 12 zum Eingreifen einer Längsrippe 13 am Spannelement 11 auf, so daß das Spannelement 11 beim Anziehen der Schraube 10 gegen ein Verdrehen gesichert ist. Der dübelartige Zapfen 8 ist vorzugsweise über seinen, die konische Öffnung 9 aufweisenden Axialbereich mit mehreren die Zapfenwandung durchsetzenden Längsschlitzen 12 ausgebildet, die gleichmäßig in z. B. kreuzförmiger Anordnung über den Zapfenumfang verteilt sind. Hierdurch wird ein gleichmäßiges Aufspreizen der dübelartigen Zapfen 8 beim Einziehen des Spannelements 11 in dessen konische Öffnung 9 gewährleistet.

In Fig. 4 und 5 ist ein Verbindungselement zur bodenseitigen Befestigung einer Haltestange 1 gezeigt. Es ist zu sehen, daß der Zapfen 8 einstückiger Bestandteil eines Baukörpers 14 mit einer Zapfenabschlußwand 15 ist, die eine zentrische Bohrung 16 zum Durchführen der im Spannelement 11 eindrehbaren Schraube 10 aufweist. An die Bohrung 16 schließt sich im Baukörper 14 über eine stufenartige Absetzung 17 eine im Durchmesser größere Bohrung 18 an, in die der Kopf der Schraube 10 eine versenkte Anordnung findet. Zwischen der eine Abstützung für den Schraubenkopf bildenden Absetzung 17 und dem Schraubenkopf ist zweckmäßigerweise eine Unterlegscheibe 19 angeordnet. Zum Drehen der Schraube 10 ist deren Schraubenkopf mit einem Innensechskant zum Einsetzen eines Schraubwerkzeugs versehen.

Der Baukörper 14 ist flanschartig ausgebildet und besitzt im Flanschteil zwei parallel zur Bohrung 16, 18 ausgerichtete Bohrungen 20 zum Durchführen von nichtgezeigten Befestigungselementen zur bodenseitigen Befestigung.

Zum Befestigen einer Haltestange 1 in einem Fahrzeug werden zunächst der dübelartige Zapfen 8, das mit einem Innengewinde versehene Spannelement 11 und die Schraube 10 miteinander verbunden, derart, daß das Spannelement 11 zwar in der Öffnung 9 des Zapfens 8 sitzt ohne diesen jedoch zu spreizen. Diese Einheit wird sodann in das untere Ende der Haltestange 1 gesteckt und daran durch Anziehen der Schraube 10, die über das Spannelement 11 ein Spreizen des Zapfens 8 bewirkt, befestigt. Durch unterschiedliche Steigungen zwischen der konischen Öffnung 9 und dem konischen Spannelement 11 kann erreicht werden, daß der Zapfen 8 am freien Endbereich stärker gespreizt wird als im Bereich der Zapfenabschlußwand 15, so daß sich zur Haltestange 1 eine besonders zuverlässige Verbindung durch Kraftschluß und geringfügigem Formschluß ergibt. Natürlich kann die Sicherheit der Verbindung durch einen nichtgezeigten im Verbindungsbereich anzuordnenden Querstift vervollkommnet werden.

Die kopfseitige Befestigung der Haltestangen 1 kann über ein nicht näher dargestelltes Gummilager 21, Deckenlager 22 und ggf. Distanzstück 23 erfolgen.

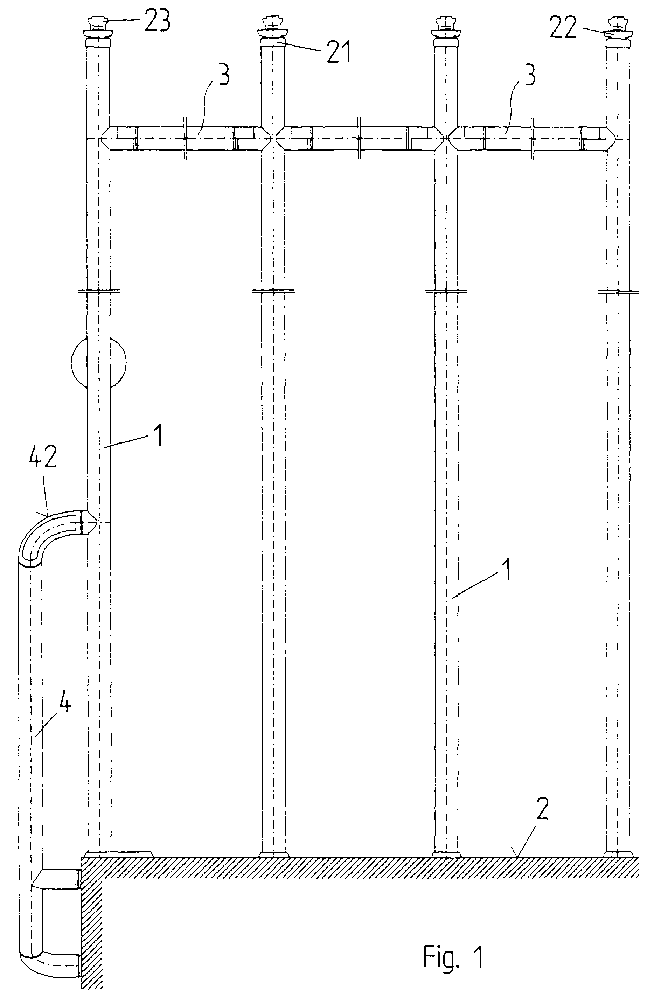

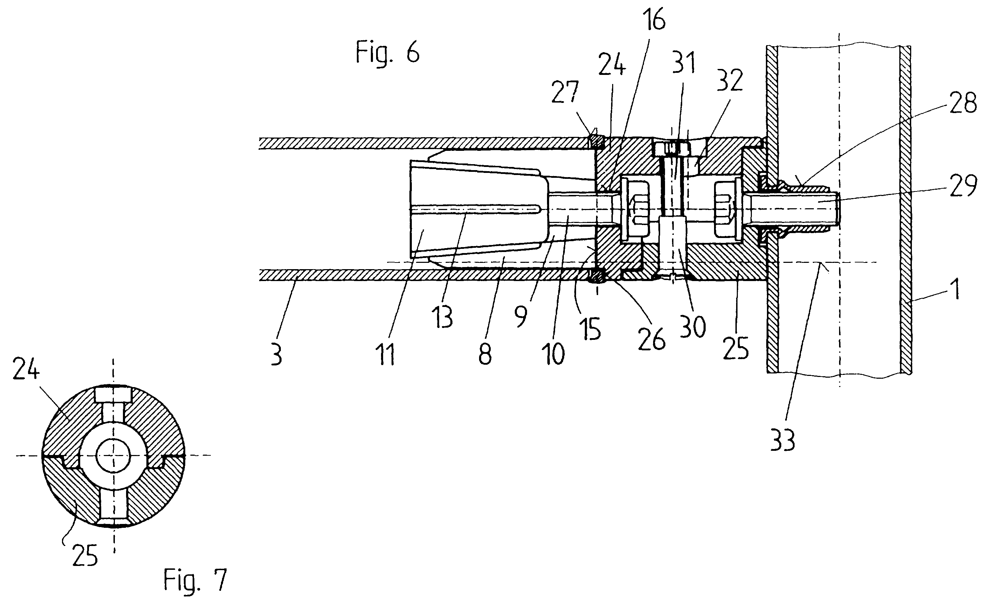

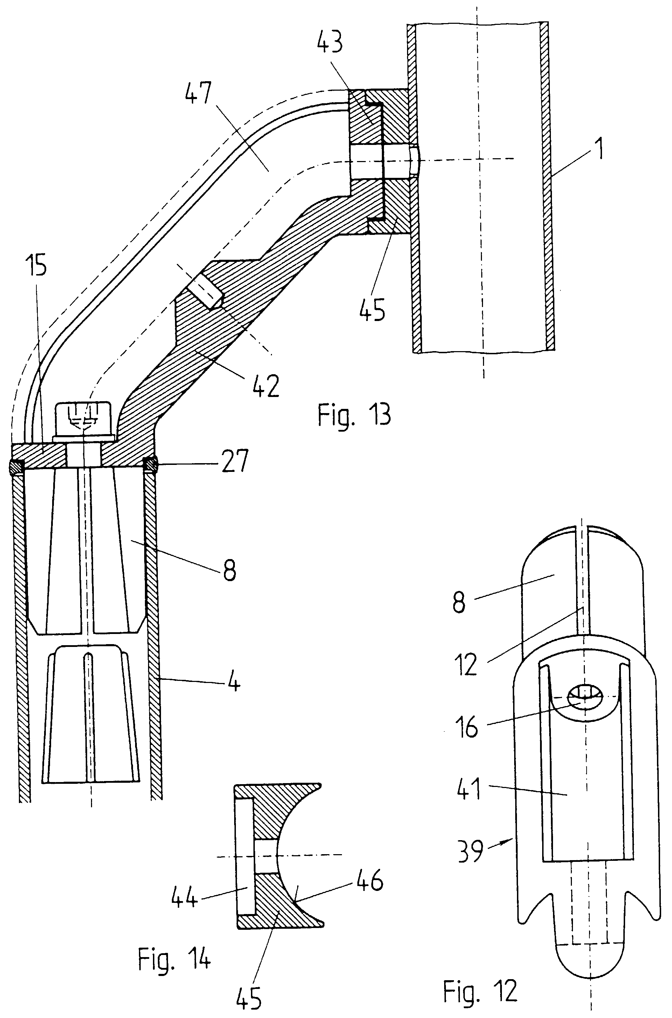

Fig. 1 zeigt sowohl eine T-förmige als auch eine kreuzförmige Anbindung der Handlaufstangen 3 an den Haltestangen 1. Ein Verbindungselement für eine T-förmige Anbindung zeigt Fig. 6 und 7. Hier ist ein dübelartiger Zapfen 8 mit einem von der Schraube 10 gehaltenen Spannelement 11 in den Endbereich einer Handlaufstange 3 eingesetzt und im Stangenende durch eine radial von innen nach außen wirkende Klemmverbindung, analog der nach Fig. 4 gehalten. An die Zapfenabschlußwand 15 schließt sich in axialer Verlängerung ein Formkörper 24 an, der mit einem an der Haltestange 1 festlegbaren Adapterelement 25, das mit einer rückseitigen Aushöhlung (wie in Fig. 14 gezeigt) den Stangenmantel bereichsweise umgreift, zusammenfügbar ist. Nach dem Zusammenfügen von Formkörper 24 und Adapterelement 25 ergibt sich ein nach Art eines in axialer und radialer Richtung geteilter Zylinderkörper, dessen Außendurchmesser dem der Stangen entspricht. Das Stirnende der Handlaufstange 3 stützt sich dabei auf einer stufenförmigen Absetzung 26, die in der Zapfenabschlußwand 15 ausgebildet ist, unter Zwischenfügung eines spaltabdeckenden Kunststoffrings 27 ab. Um bei etwa auftretenden Toleranzen einen Fugeneinblick zu vermeiden, sind die aneinander zu liegen kommenden Wandungen zwischen dem Formkörper 24 und dem Adapterelement 25 labyrinthförmig, z. B. wie in Fig. 7 gezeigt, gestaltet, und zwar insbesondere auch in vertikaler Richtung.

Bei der Montage wird zunächst das Adapterelement 25 mittels einer Einnietmutter 28 an der mit einer entsprechenden Aufnahmebohrung vorbereiteten Haltestange 1 befestigt, und zwar mittels der Befestigungsschraube 29, die das Adapterelement 25 mit der Haltestange 1 verspannt. Der Formkörper 24 mit der daran angeschlossenen Handlaufstange wird gegen das Adapterelement 25 gesetzt, was zweckmäßigerweise von oben her erfolgt, wonach Formkörper 24 und Adapterelement 25 gegeneinander verspannt werden. Hierfür sind in einer die beiden Teile durchsetzenden Bohrungen eine Hülsen mutter 30 von unten her und eine darin eindrehbare Schraube 31 von oben her eingesetzt. Ein Toleranzausgleich in Achsrichtung der Handlaufstange 3 kann über eine Bohrungserweiterung 32 im Formkörper 24 erfolgen. Die in Fig. 6 eingezeichnete strichpunktierte Linie 33 soll die Möglichkeit einer Lochdurchführung im Verbindungselement verdeutlichen, die sinnvoll ist, wenn innerhalb der Stangen elektrische Leiterdrähte beispielsweise für eine Haltewunschtaste angeordnet werden sollen.

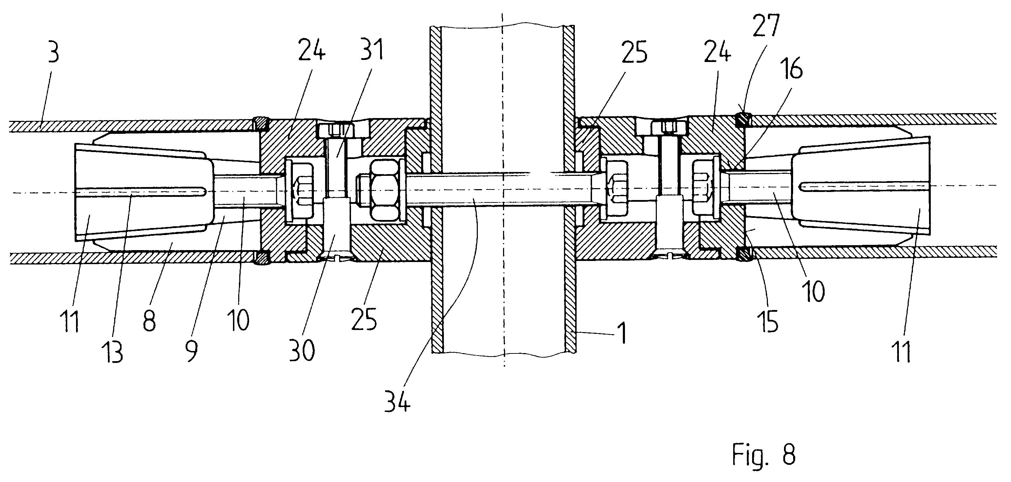

Die in Fig. 6 gezeigte T-förmige Anbindung kann auch zu einer kreuzförmigen Anbindung erweitert werden, wenn von der anderen Seite der Haltestange 1 her ein Adapterelement 25 daran befestigt wird. Bevorzugt wird aber, wie in Fig. 8 gezeigt, eine kreuzförmige Anbindung zweier Handlaufstangen 3 an einer Haltestange 1 über eine die Haltestange 1 querende Durchgangsschraube 34, die gleichzeitig zwei Adapterelemente 24 an die Haltestange 1 festlegt, bewirkt. Die übrigen Elemente der Verbindungsanordnung nach Fig. 8 entsprechen den in Fig. 6, 7 gezeigten.

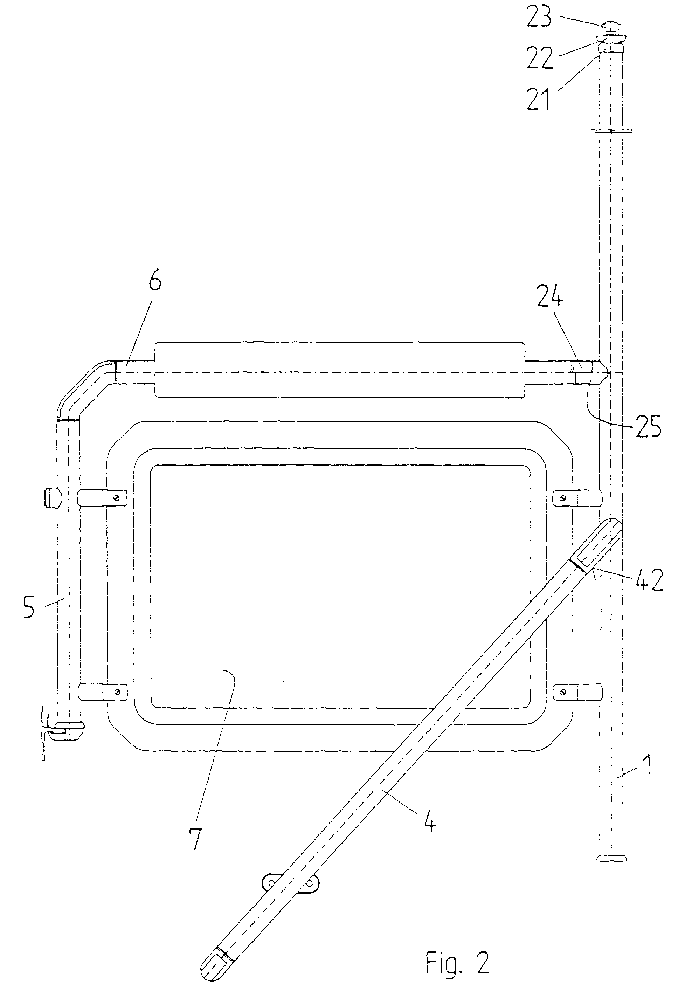

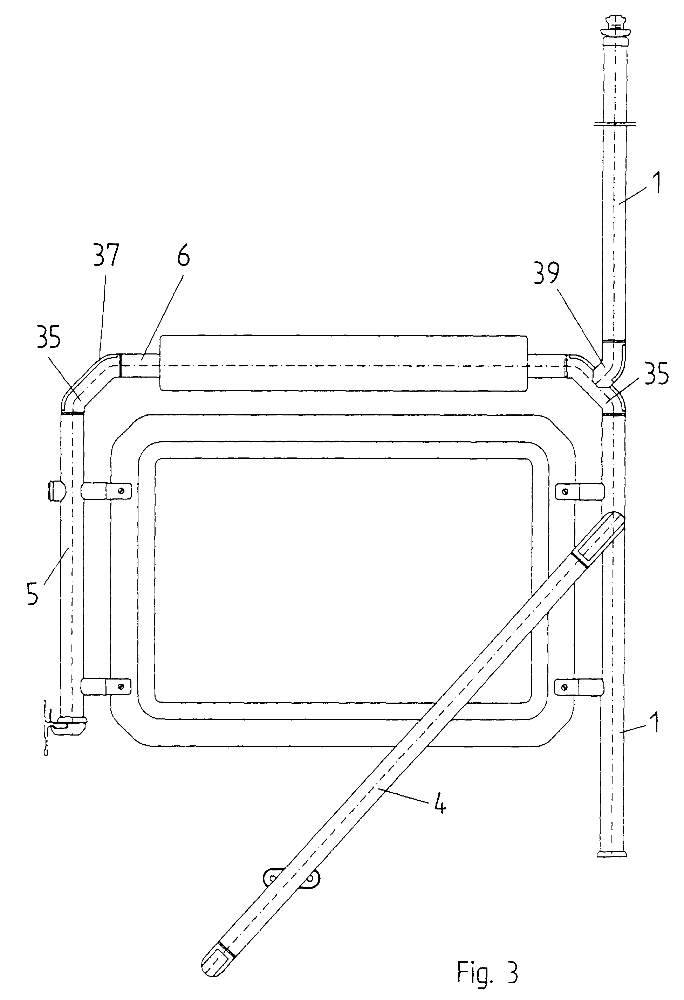

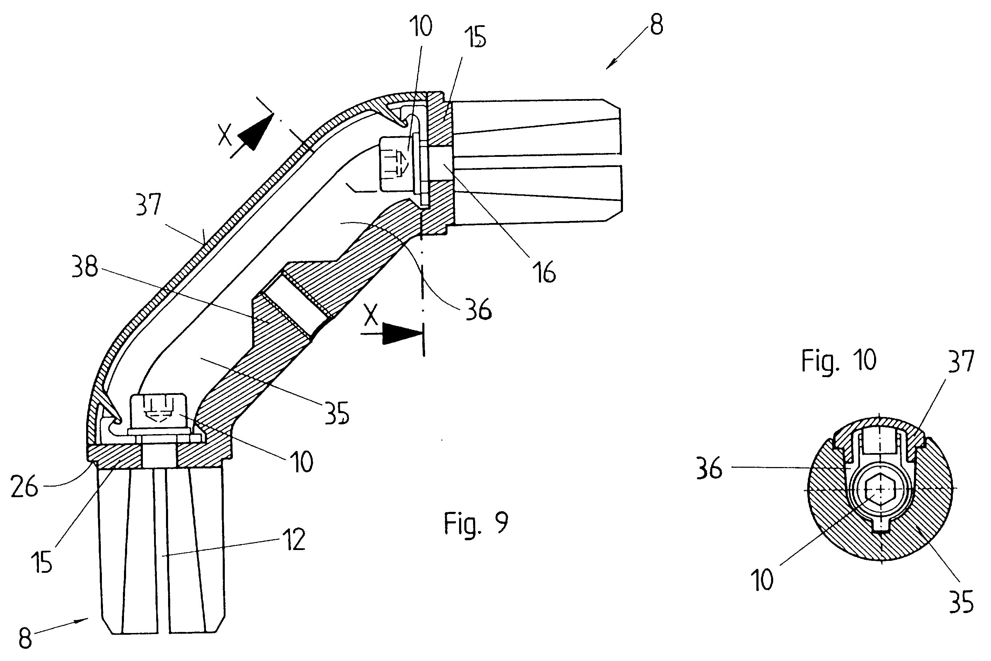

Ein Verbindungselement, beispielsweise für die Verbindung der Verbindungsstangen 5, 6 nach Fig. 2 und 3 ist in Fig. 9 gezeigt. Dieses Verbindungselement besteht aus einem Formkörper 35, der zwei dübelartige Zapfen 8 tragende Zapfenabschlußwände 15 zu einem 90 °-Winkel miteinander vereinigt. Ein Formkörperhohlraum 36 ermöglicht das Einsetzen und Drehen von Schrauben 10 zum Anziehen der hier nicht gezeigten Spannelemente 11. Der Formköperhohlraum 35 ist durch ein Abdeckelement 37 verschließbar, dessen Festlegung am Formkörper 35, z. B. wie dargestellt über Klipsverbindungen erfolgen kann. Der Formkörper 35 besitzt zusammen mit der Abdeckung 37 einen kreisförmigen Querschnitt (vgl. auch Fig. 10) und einen den Stangen, hier den Verbindungsstangen 5, 6 entsprechenden Durchmesser.

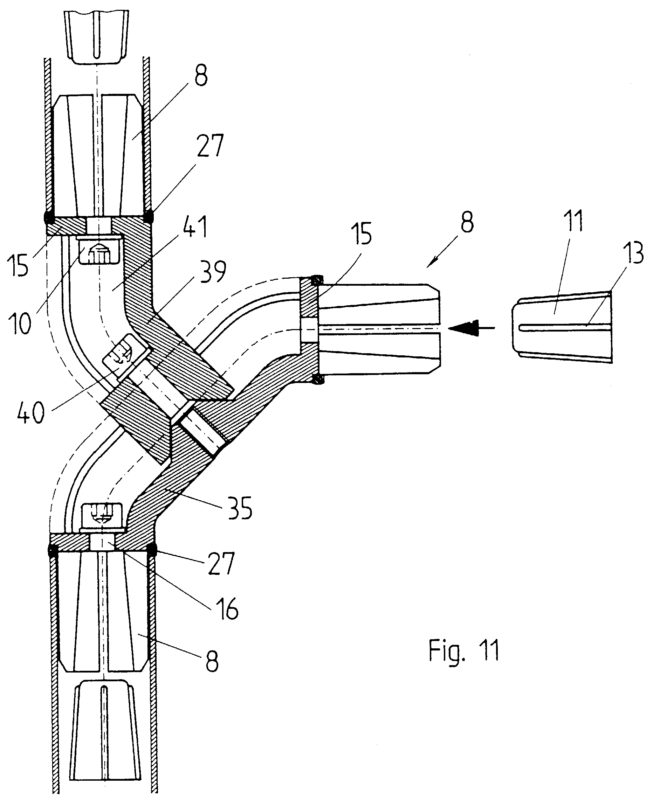

Das Verbindungselement nach Fig. 9 ist erweiterungsfähig, insbesondere zum Herstellen einer Verbindung, wie sie in Fig. 3 bei einer in Axialrichtung geteilten Haltestange 1 gezeigt ist. Hierfür ist der Formkörper in seinem Formhohlraum 36 mit einem mittig auf dem Boden angeformten Kegel 38 ausgebildet, auf den, wie besonders deutlich in Fig. 11 gezeigt, ein weiteres Verbindungselement in Form eines 45 °-Eckstücks 39 mit einem Endbereich aufsetzbar ist. Der auf den Kegel 38 aufsetzbare Endbereich des Eckstücks 39 ist so geformt (vgl. auch Fig. 12), daß sich eine verdrehfeste Verbindung zwischen diesen Teilen, die im übrigen durch eine Halteschraube 40 aneinander festzulegen sind, ergibt. Am anderen Endbereich des Eckstücks 39 ist wiederum eine Zapfenabschlußwand 15 nebst einem Zapfen 8 angeformt, an dem unter Zugrundelegung von Fig. 3 der obere Teil der Haltestange 1 in schon beschriebener Weise anschließbar ist. Das 45 °-Eckstück ist ebenfalls mit einem Formhohlraum 41 ausgebildet, der ähnlich wie in Fig. 9 gezeigt mit einem Abdeckelement verschließbar ist.

Das in Fig. 13 gezeigte Verbindungselement besteht aus einem Eckstück 42 in einer 90 °-Ausführung. Das eine Ende des Eckstücks 42 trägt über der Zapfenabschlußwand 15 den wiederholt beschriebenen dübelartigen Zapfen 8, der hier in die Handlaufstütze 4 eingreift. Das andere Ende des Eckstücks 42 ist mit einem abgesetzten Zapfen 43 ausgebildet, der in die topfartige Vertiefung 44 eines an der Haltestange 1 zu befestigenden Adapterelements 45 eingesetzt ist. Das Adapterelement umgreift mit einer rückseitigen Aushöhlung 46 bereichsweise den Mantel der Haltestange 1. Eckstück 42 und Adapterelement 45 sind gemeinsam an der Haltestange befestigt, beispielsweise in einer aus Fig. 6 ersichtlichen Art. Der Formkörperhohlraum 47 des Eckstücks 42 kann ähnlich wie in Fig. 9 gezeigt durch ein Abdeckelement verschlossen werden.

Die Befestigung der Trennwand 7 an der Haltestange 1 und der Verbindungsstange 5 sollte über Befestigungslemente erfolgen, die die Rohrabschnitte nicht rohrschellenartig umfassen. Es empfiehlt sich Befestigungselemente mit einer rückseitigen Aushöhlung (wie in Fig. 14 gezeigt) einzusetzen, damit das optische Erscheindungsbild des Haltestangensystems nicht negativ beeinflußt wird.

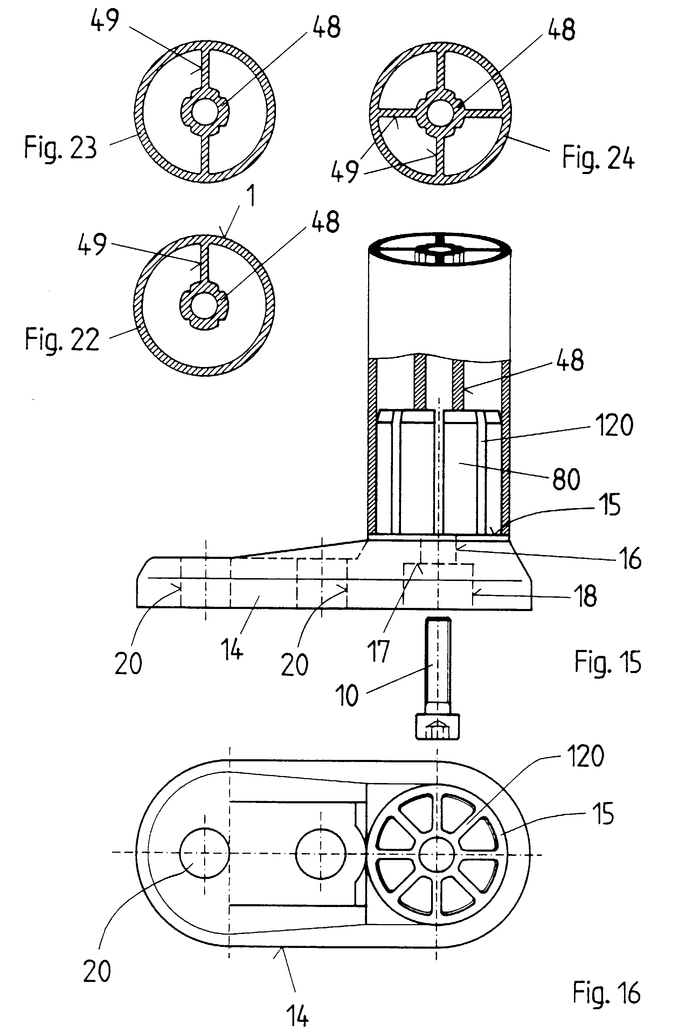

Die in Fig. 15 bis 21 gezeigten Verbindungselemente haben miteinander gemeinsam, daß sie zumindest einen dem Öffnungsquerschnitt der Stangen angepaßten dübelartigen Zapfen 80 aufweisen, der in ein jeweiliges Stangenende einsetzbar ist. Jeder Zapfen 80 ist rohrförmig und die Zapfenwandung ist mit zumindest einem radialen Längsschlitz 120 ausgebildet. Vorzugsweise weisen aber die Zapfen 80 mehrere derartige Schlitze 120 auf.

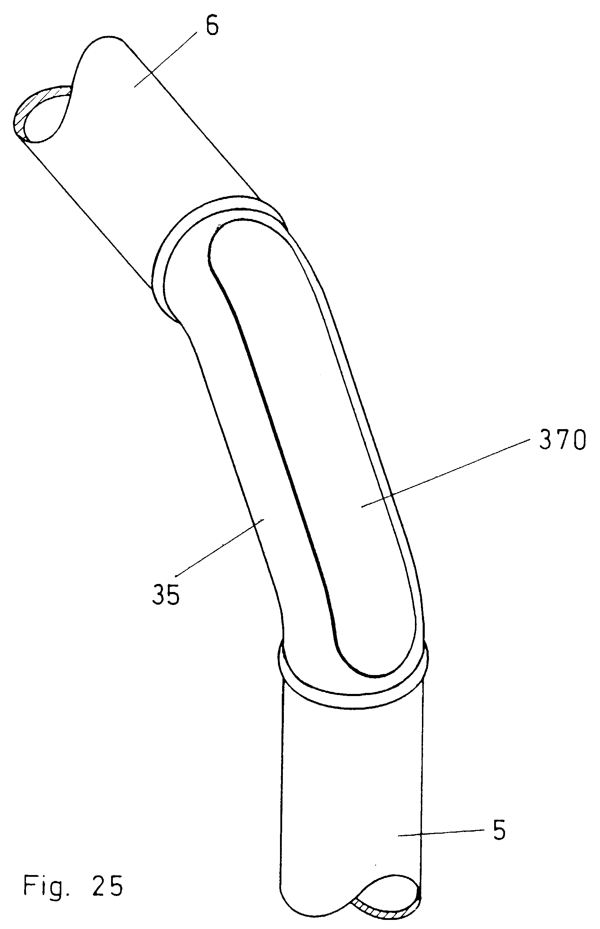

Die in den Fig. 15 bis 21 gezeigten Verbindungselemente sind zum Verbinden von Stangen, der in Fig. 22 bis 24 gezeigten Art bestimmt. Jede dieser Stangen trägt in zentrischer Anordnung einen koaxial verlaufenden Rohrkörper 48, der über zumindest einen durchlaufenden Radialsteg 49 einstückig mit der Stange ausgebildet ist, was problemlos durch Strangpressen realisiert werden kann. Während Fig. 22 eine Stange mit nur einem Radialsteg 49 zeigt, ist die Stange 1 nach Fig. 23 mit zwei und die Stange nach Fig. 24 mit vier solchen Radialstegen 49 ausgebildet. Wichtig ist die Abstimmung zwischen den Längsschlitzen 120 und den darin eingreifenden Radialstegen 49, die eine Verdrehsicherung bewirken.

Das in Fig. 15 und 16 gezeigte Verbindungselement dient zur bodenseitigen Befestigung einer Haltestange 1, die einen in Fig. 22, 23 oder 24 gezeigten Querschnitt aufweisen kann. Das Verbindungselement besitzt mit Ausnahme des abgewandelt gestalteten Zapfens 80 einen dem Ausführungsbeispiel nach Fig. 4 und 5 entsprechenden Aufbau, so daß auch die dort verwandten Bezugszeichen beibehalten wurden.

Zur Montage wird das Verbindungselement mit dem Zapfen 80 in ein Stangenende gesteckt, und zwar bis zur Anlage an der Zapfenabschlußwand 15, wobei der zumindest eine Längsschlitz 120 den zumindest einen Radialsteg 49 aufnimmt. Alsdann ist lediglich die auch hier vorgesehene Schraube 10 in den als Schraubkanal dienenden Rohrkörper 48 einzudrehen bis zur festen Verspannung des Verbindungselements an der jeweiligen Stange. Bevorzugt werden dabei Schrauben 10 eingesetzt, die sich ihr Gewinde selber schneiden.

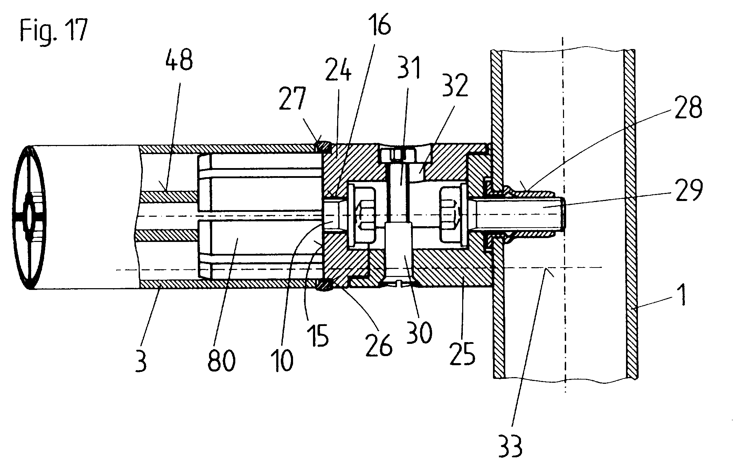

Das Verbindungselement nach Fig. 17 entspricht im wesentlichen dem nach den Fig. 6 und 7, so daß von einer näheren Erläuterung abgesehen wird. Der einzige aber wesentliche Unterschied besteht in der Ausbildung des Zapfens 80 und in der Befestigungsart, wonach die Schraube 10 nicht in das Innengewinde eines konischen Spannelements, sondern unmittelbar in den einen Schraubkanal bildenden Rohrkörper 48 der Stange eingeschraubt wird.

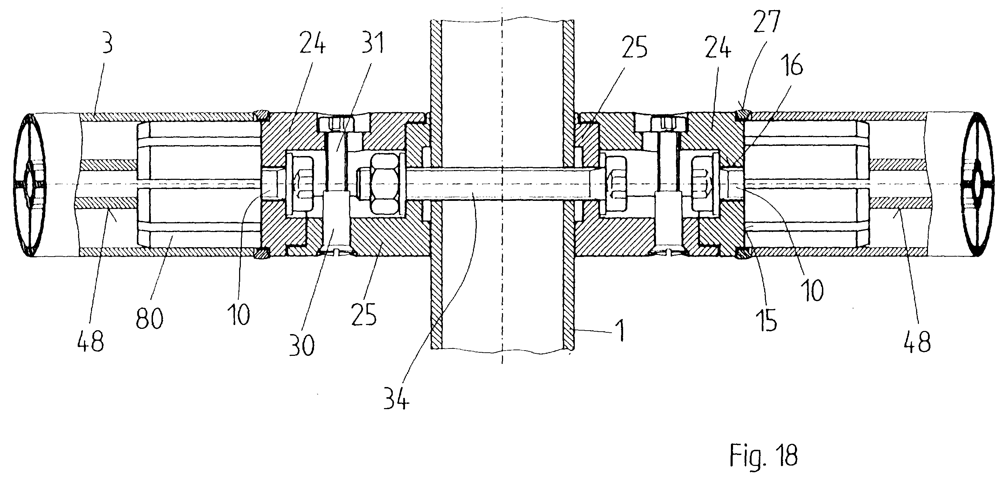

Auch beim Ausführungsbeispiel nach Fig. 18 ist ein dem Ausführungsbeispiel nach Fig. 8 entsprechender Aufbau gegeben, jedoch wieder mit dem Unterschied, daß die Stangen einen in Fig. 22, 23 oder 24 gezeigten Querschnitt aufweisen und daß die Zapfen 80 rohrförmig sind und keine konische Öffnung für ein konisch gestaltetes Spannelement besitzen.

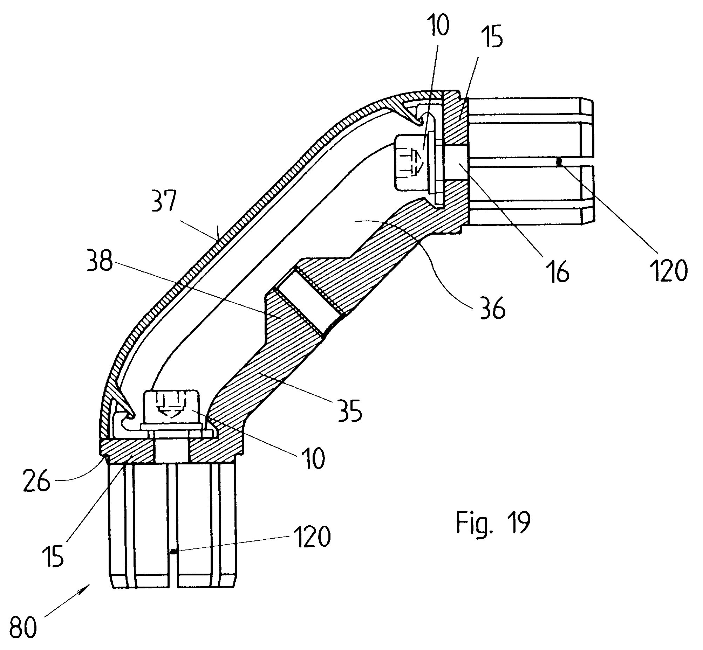

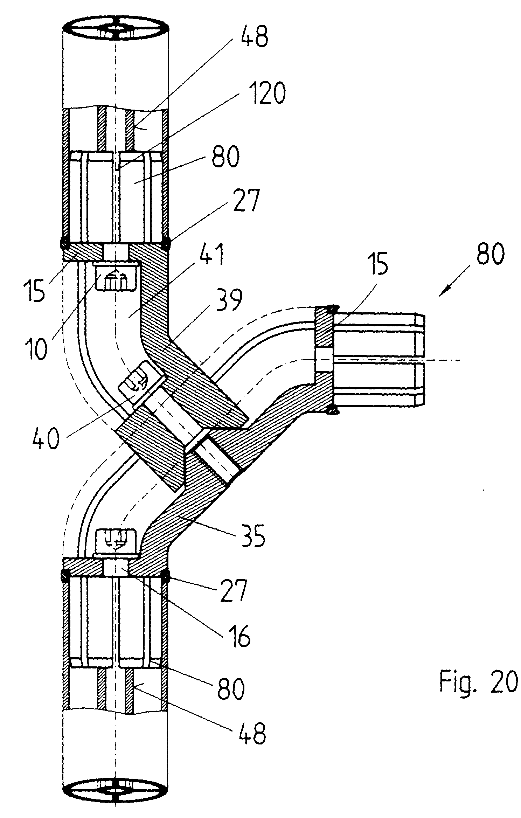

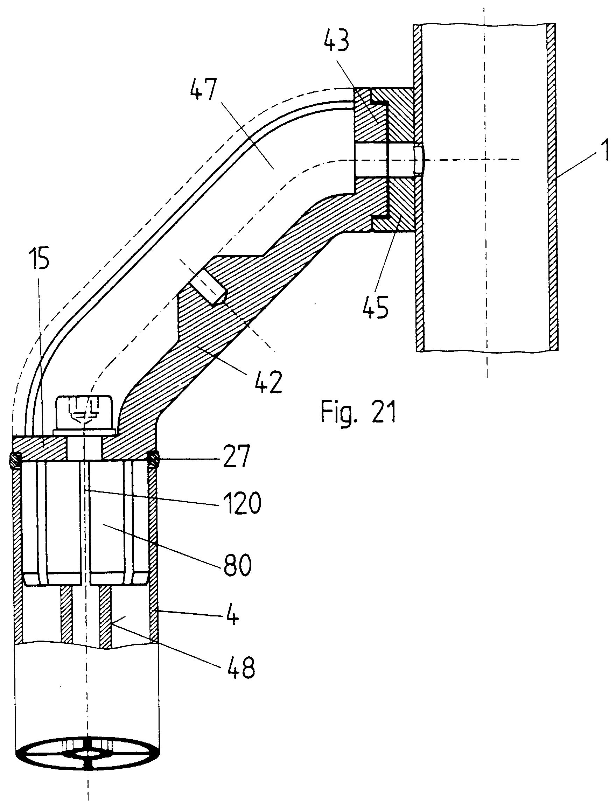

Das Verbindungselement nach Fig. 19 besitzt mit Ausnahme der rohrförmigen Zapfen 80 einen dem Ausführungsbeispiel nach Fig. 9 und 10 entsprechenden Aufbau. Gleiches gilt auch für das Verbindungselement nach Fig. 20, das dem nach Fig. 11 entspricht wie auch für das Verbindungselement nach Fig. 21 das wiederum mit Ausnahme der Zapfen 80 dem Ausführungsbeispiel nach Fig. 12 bis 14 entspricht.

Die im einzelnen beschriebenen Verbindungselemente bestehen zweckmäßigerweise aus Metall und sind z. B. als Aluminiumdruckgußteile ausgebildet. Für die Spannelemente 11 (Fig. 4 bis 13) wird Stahl als Herstellungsmaterial bevorzugt.

Die Erfindung läßt sich außer dem bevorzugten Anwendungsgebiet in Bussen auch überall dort verwirklichen, wo abgelängte Rohrabschnitte zuverlässig, formschön, formbündig und elegant miteinander zu verbinden sind.

Fig. 25 zeigt einen Formkörper 35 als Eckverbindungselement zwischen den Verbindungsstangen 5 und 6 der anhand der Fig. 9 oder 19 beschriebenen Art. Anders als bei den vorbeschriebenen Ausführungsformen besteht hier das Abdeckelement 370 aus einem lichtdurchlässigen Material, das die Farben, weiß, gelb, rot, grün oder blau aufweisen kann. Das Abdeckelement 370 ist von einer im Formkörperhohlraum 36 des Formkörpers angeordneten Lichtquelle (nicht gezeigt) ausleuchtbar. Aufgrund dieser Maßnahme kann einerseits der vorhandene Formkörperhohlraum 36 als Formkörper 35 sinnvoll genutzt werden und das Abdeckelement 370 als Leuchtfeld abgeändert werden, um auf diese Weise eine Orientierungsleuchte oder deren mehrere zu erhalten, was insbesondere bei Fahrten während der Dunkelheit wesentlich zur Sicherheit der Fahrgäste beiträgt.

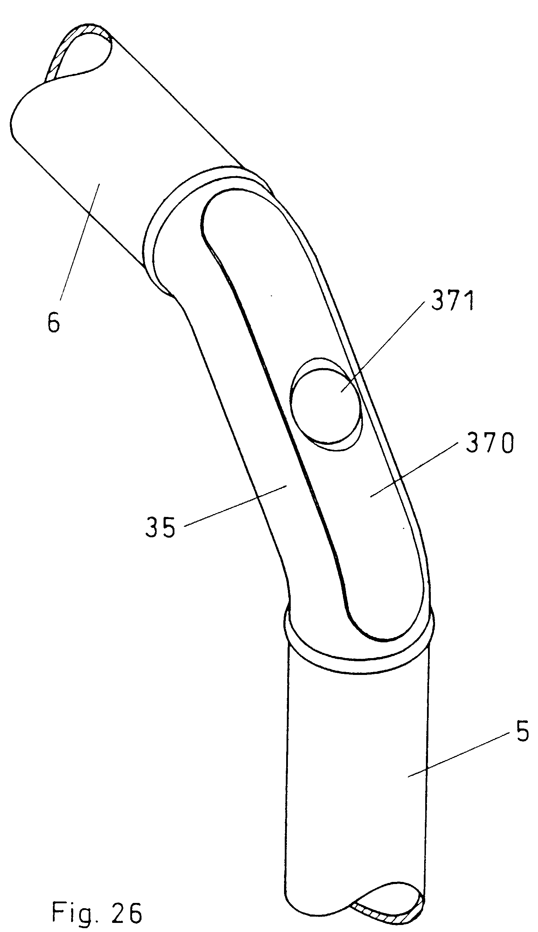

In Fig. 26 ist gezeigt, daß das Abdeckelement 370 aus lichtdurchlässigem Material in zentrischer Anordnung eine Haltewunschtaste 371 tragen kann, die eine Öffnung im Abdeckelement 370 durchsetzt. Die elektrische Verdrahtung für die Beleuchtungseinrichtung und für die Haltewunschtaste 371 ist durch die Haltestangen, Verbindungsstangen usw. geführt und in herkömmlicher Weise mit der allgemeinen Fahrzeugelektrik verbindbar.

Die in Fig. 25 und 26 gezeigten Maßnahmen tragen nicht nur zur Sicherheit sondern auch zur Verschönerung des Gesamtsystems bei, zumal auch das Abdeckelement 370 rohrbündig am Formkörper 35 angeordnet ist. Denkbar ist auch, daß die Haltestangen, Verbindungsstangen und/oder Handlaufstangen mit durch Abdeckelemente verschließbare Ausnehmungen erhalten, wobei dann die Abdeckelemente ausleuchtbar und mit Haltewunschtasten versehen sein können.

## Patentansprüche

1. Bausatz, insbesondere für Busse, mit aus abgelängten Rohrabschnitten gleichen Durchmessers bestehenden Haltestangen (1), Handlaufstangen (3), Handlaufstützen (4) und Verbindungsstangen (5) und (6),
ersten Verbindungselementen zur bodenseitigen Befestigung der Haltestangen (1), jeweils bestehend aus einem flanschartigen Baukörper (14), der einstückig mit einem dübelartigen Zapfen (8, 80) ausgebildet ist,
zweiten Verbindungselementen zum Befestigen der Handlaufstangen (3) an den Haltestangen (1), jeweils bestehend aus einem, einen dübelartigen Zapfen (8, 80) aufweisenden Formkörper (24), der mit einem an einer Haltestange (1) festlegbaren Adapterelement (25), das mit einer rückseitigen Aushöhlung (46) den Mantel der Haltestange (1) bereichsweise umgreift, mittels eines Querbolzens zusammenfügbar ist, und zwar nach Art eines in axialer und radialer Richtung geteilten Zylinderkörpers, dessen Außendurchmesser dem der Handlaufstangen (3) und Haltestangen (1) entspricht,
dritten Verbindungselementen zum Befestigen von Verbindungsstangen (5) und (6) aneinander, jeweils bestehend aus einem einstückigen, zwei dübelartige Zapfen (8, 80) zu einem 90°-Winkel miteinander vereinigenden Formkörper (35), der einen durch ein Abdeckelement (37) verschließbaren Formkörperhohlraum (36) und einen den Verbindungsstangen (5) und (6) entsprechenden Durchmesser aufweist,
wobei jeder dübelartige Zapfen (8, 80) dem Öffnungsquerschnitt der Stangen angepaßt, in ein Stangenende einsetzbar und verankerbar ist und von einer Zapfenabschlußwand (15) ausgeht, die eine zentrische Durchgangsbohrung (16) zum Durchführen einer Schraube (10) und eine stufenförmige Absetzung (26) zum Abstützen des jeweiligen Stangenendes aufweist.

2. Bausatz nach Anspruch 1, dadurch gekennzeichnet, daß jeder dübelartige Zapfen (8) mit einer sich axial erstreckenden konischen Öffnung (9) ausgebildet ist, in die mittels der Schraube (10) ein konisches Spannelement (11) einziehbar ist und daß jeder dübelartige Zapfen (8) zumindest einen radialen Längsschlitz (12) zum Eingreifen einer Längsrippe (13) am Spannelement (11) aufweist.

3. Bausatz nach Anspruch 1, dadurch gekennzeichnet, daß jede Haltestange (1), Handlaufstange (3), Handlaufstütze (4) und Verbindungsstange (5, 6) einstückig über zumindest einen daran angebundenen Radialsteg (49) in zentrischer Anordnung einen koaxial verlaufenden Rohrkörper (48) trägt, daß der in das Stangenende eingesetzte dübelartige Zapfen (80) eines jeden Verbindungselements rohrförmig ausgebildet ist und zumindest einen den zumindest einen Radialsteg (49) aufnehmenden sich über eine axiale Länge erstreckenden Radialschlitz (120) aufweist und daß zum Verankern eines jeden Verbindungselements eine in den Rohrkörper (48) eindrehbare, sich mit ihrem Kopf am jeweiligen Verbindungselement abstützenden Spannschraube (10) vorgesehen ist.

4. Bausatz nach wenigstens einem der Ansprüche 1 bis 3, dadurch gekennzeichnet, daß der Zapfen (8, 80) über seinen an die Zapfenabschlußwand (15) angrenzenden Axialbereich mehrere die Zapfenwandung durchsetzende Längsschlitze (12, 120) mit gleichmäßig über den Zapfenumfang verteilter Anordnung aufweist.

5. Bausatz nach wenigsten einem der Ansprüche 1 bis 4, dadurch gekennzeichnet, daß sich die zentrische Bohrung (16) in der Zapfenabschlußwand (15) auch durch den Grundkörper (14) hindurch als Durchgangsbohrung erstreckt, jedoch mit größerem Durchmesser im Grundkörperbereich.

6. Bausatz nach wenigstens einem der Ansprüche 1 bis 5, dadurch gekennzeichnet, daß der Querbolzen aus einer Schraube (31) besteht, die in einer mit Innengewinde versehenen Bohrung im Adapterelement (25) angeordneten Gewindehülse (30) einschraubbar ist, und daß die im Formkörper (24) vorgesehene Bohrung für die Schraube (31) zwecks versenkbarer Anordnung des Schraubenkopfs abgesetzt ist und zwecks Ermöglichung eines Längentoleranzausgleichs der anzuschließenden Stange durch eine Bohrungserweiterung (32) verbreitert ist.

7. Bausatz nach wenigstens einem der Ansprüche 1 bis 6, dadurch gekennzeichnet, daß der Formkörper (35) in seinem Formhohlraum (36) einen mittig angeformten Kegel (38) aufweist, der von dem einen Ende eines 45°-Eckstücks (39), das am anderen Ende mit einem Zapfen (8, 80) und einer Zapfenabschlußwand (15) ausgerüstet ist, übergriffen wird, wobei das 45°-Eckstück (39) einen durch ein Abdeckelement verschließbaren Formkörperhohlraum zur Betätigung der Schraube (10) und zur Betätigung einer Spannschraube (40), die in einem Gewindedurchzug des Kegels (38) einschraubbar ist, aufweist.

8. Bausatz nach wenigstens einem der Ansprüche 1 bis 7, dadurch gekennzeichnet, daß derselbe ein viertes Verbindungselement aufweist, welches aus einem 90°-Winkelstück (42) mit einem durch ein Abdeckelement verschließbaren Hohlraum (47) besteht, das an einem Ende über eine Zapfenabschlußwand (15) einen Zapfen (8, 80) trägt und am anderen Ende mit einem Adapterelement (45) verbindbar ist, das eine rückseitige Aushöhlung (46) zum bereichsweisen Umgreifen eines Stangenmantels aufweist.

9. Bausatz nach wenigstens einem der Ansprüche 1 bis 8, dadurch gekennzeichnet, daß zwischen der stufenartigen Absetzung (26) der Zapfenabschlußwand (15) und dem sich darauf abstützenden Stangenende ein Zwischenring (27) aus Kunststoffmaterial als Spaltabdeckung angeordnet ist.

10. Bausatz nach wenigstens einem der Ansprüche 1 bis 9, dadurch gekennzeichnet, daß das Abdeckelement (370) aus einem lichtdurchlässigen Material besteht und von einer im Formkörperhohlraum (36) angeordneten Lichtquelle einer Beleuchtungseinrichtung ausleuchtbar ist.

11. Bausatz nach Anspruch 10, dadurch gekennzeichnet, daß das Abdeckelement (370) in integrierter Anordnung eine Haltewunschtaste (371) trägt.

## Claims

1. Construction assembly in particular for buses, with holding rods (1), with handrail rods (3), with supports (4) for the handrail and connection rods (5) and (6) comprising tubular segments cut to measure and of the same diameter, with first connecting elements for fastening to the bottom of the holding rods (1), respectively comprising a constructive body (14) in the manner of a flange, which is shaped in a single piece with a pin (8, 80) in the manner of a dowel, with second connecting elements for fastening the rods (3) of the handrail to the holding rods (1), respectively comprising a shaped body (24) presenting a pin (8, 80) in the manner of a dowel which by means of a transverse pin can be joined with an adapter (25) which can be fastened onto a holding rod (1) and encompassing, in zones, with a rear cavity (46) the skirt of the holding rod (1), i.e. in the manner of a cylindrical body cut in axial and radial direction, whose outer diameter corresponds to that of the rods (3) of the handrail and of the holding rods (1), with third connecting elements for fastening the connection rods (5) and (6), respectively comprising a shaped body (35) in a single piece, joining together at a 90° angle two pins (8, 80) in the manner of a dowel and presenting a cavity (36) of the shaped body which can be closed by means of a covering element (37) and a diameter corresponding to the connection rods (5) and (6), each pin (8, 80) in the manner of a dowel being suited to the transverse opening section of the rods, being able to be inserted and fastened into an end of the rod and extending starting from a closure wall (15) of the pin, which presents a through hole (16) for the passage of a screw (10) and a shoulder (26) in the manner of a step for the support of the respective end of the rod.

2. Construction assembly according to claim 1, characterised in that each pin (8) in the manner of a dowel is shaped with a conical opening (10) extending axially, wherein by means of the screw (10) can be introduced a tightening element (11) and in that each pin (8) in the manner of a dowel presents at least one longitudinal radial slot (12) for the coupling of a longitudinal rib (13) onto the tightening element (11).

3. Construction assembly according to claim 1, characterised in that each holding rod (1), handrail rod (3), handrail support (4) and connecting rod (5, 6) bears in a single piece and through at least one radial rib (39) attached thereto, a tubular body (48) extending coaxially and in central disposition, in that the pin (80) in the manner of a dowel, introduced into the end of the rod, of each connecting element is tubularly shaped and presents at least one radial slot (120) extending along one axial length and housing at least one radial rib (49) and in that for anchoring each connecting element a tightening screw (10) is provided, which can be screwed into the tubular body (48) and is supported with its head onto the respective connecting element.

4. Construction assembly according to at least one of the claims from 1 to 3, characterised in that the pin (8, 80) presents, along its axial area bordering with the closure wall (15) of the pin, multiple longitudinal slots (12, 120) passing through the wall of the pin with uniformly distributed disposition along the perimeter of the pin.

5. Construction assembly according to at least one of the claims from 1 to 4, characterised in that the central hole (16) in the closure wall (15) of the pin extends, as a through hole, also through the base body (14), but with a greater diameter in the area of the construction body.

6. Construction assembly according to at least one of the claims from 1 to 5, characterised in that the transverse pin comprises a screw (31), which can be screwed into a threaded bush (30) with hole provided with internal thread and set in the adapter (25), and in that the hole for the screw (31) provided in the shaped body (24) is depressed in order to have an embeddable disposition of the screw head and is widened by means of an enlargement (32) of the hole in order to enable a tolerance compensation of the length of the rod to be connected.

7. Construction assembly according to at least one of the claims from 1 to 6, characterised in that the shaped body (35) presents in its cavity (36) a cone (38) centrally shaped thereon, which is engaged at its top by an end of a union (39) angled to 45°, fitted on the other end with a pin (8, 80) and with a closure wall (15) of the pin, the 45° angled union (39) presenting a cavity of the shaped body which can be closed by means of a covering element, for the operation of the screw (10) and for the operation of a tightening screw (40), which can be screwed into a threaded pitch of the cone (38).

8. Construction assembly according to at least one of the claims from 1 to 7, characterised in that it presents a fourth connecting element, which comprises a union (42) angled to 90° with a cavity (47) which can be closed by means of a covering element, which angle piece bears, on an end and through a closure wall (15), a pin (8,80) and on the other end can be connected to an adapter (45), which presents a rear cavity (46) for encompassing in zones a skirt of the rod.

9. Construction assembly according to at least one of the claims from 1 to 8, characterised in that between the shoulder (26) in the manner of a step of the closure wall (15) of the pin and the end of the rod supporting thereon, is set an intermediate ring (27) made of plastic material as cover for the slot.

10. Construction assembly according to at least one of the claims from 1 to 9, characterised in that the covering element (370) is made of a transparent material and it can be lighted by a light source of a lighting device positioned in the cavity (36) of the shaped body.

11. Construction assembly according to claim 10, characterised in that the covering element (370) bears in integral disposition a push-button for requesting a stop (371).

## Revendications

1. Assortiment de pièces de construction, en particulier pour des autobus, avec des montants de retenue (1), des mains courantes (3); des appuis courants (4) et des montants de liaison (5) et (6), se composant de sections de tubes, coupées à longueur, de même diamètre,
caractérisé en ce qu'
il comprend des premiers éléments de liaison qui servent à la fixation des montants de retenue (1) du côté du sol, consistant respectivement en un corps de montage (14) en forme de bride, constitué d'une seule pièce avec un tenon (8, 80) en forme de cheville, des seconds éléments de liaison servant à fixer les mains courantes (3) sur les montants de retenue (1), consistant respectivement en un corps moulé (24) présentant un tenon (8, 80) en forme de cheville, corps moulé (24) qui peut être réuni au moyen d'un boulon traversant, à un élément d'adaptation (25) que l'on peut fixer sur un montant de retenue (1), et qui entoure localement, par une cavité (46) située à l'arrière, l'enveloppe du montant de retenue (1) en fait à la manière d'un corps cylindrique divisé dans le sens axial et radial, corps cylindrique dont le diamètre extérieur correspond à celui des mains courantes (3) et des montants de retenue (1), des troisièmes éléments de liaison servant à fixer les uns aux autres les montants de liaison (5) et (6), consistant respectivement en un corps moulé d'une seule pièce (35), réunissant l'un à l'autre deux tenons (8, 80,) en forme de cheville, sous un angle de 90°, qui présente une cavité (36) pouvant être fermée par un élément de recouvrement (37) et un diamètre correspondant aux montants de liaison (5) et (6), chaque tenon (8, 80) en forme de cheville étant adapté à la section transversale de l'ouverture des montants, pouvant être inséré et ancré dans une extrémité du montant et sortant d'une paroi terminale (15), du tenon qui présente un alésage central de passage (16) servant à faire passer une vis (10) et un épaulement en forme de gradin (26) permettant l'appui de l'extrémité correspondante du montant.

2. Assortiment de pièces de construction selon la revendication 1,
caractérisé en ce que
• chaque tenon (8) en forme de cheville est pourvu d'une ouverture conique (9) s'étendant axialement, ouverture dans laquelle on peut visser au moyen de la vis (10), un élément de serrage conique (11), et
• chaque tenon (8) en forme de cheville présente au moins une fente radiale longitudinale (12) pour venir en prise avec une nervure longitudinale (13) sur l'élément de serrage (11).

3. Assortiment de pièces de construction selon la revendication 1,
caractérisé en ce que
• chaque montant de retenue (1), main courante (3), appui courant (4) et montant de liaison (5, 6) porte un corps tubulaire qui s'étend coaxialement, d'une seule pièce, sur au moins une nervure radiale reliée à ceux-ci (49), dans une disposition centrale,
• le tenon (80) en forme de cheville, inséré dans l'extrémité du montant, de chacun des éléments de liaison est constitué sous la forme d'un tube et présente au moins une fente radiale (120) recevant l'une au moins des nervures radiales (49) et s'étendant sur une longueur axiale, et
• pour ancrer chacun des éléments de liaison, on prévoit une vis de serrage (10) qui peut être vissée dans le corps tubulaire (48) et qui prend appui par sa tête sur l'élément de liaison correspondant.

4. Assortiment de pièces de construction selon au moins l'une des revendications 1 à 3,
caractérisé en ce que
le tenon (8, 80) présente sur sa zone axiale adjacente à la paroi terminale (45) du tenon, plusieurs fentes longitudinales (12, 120) passant à travers la paroi du tenon selon une disposition régulièrement répartie sur le pourtour du tenon;

5. Assortiment de pièces de construction selon au moins l'une des revendications 1 à 4,
caractérisé en ce que
l'alésage central (16) s'étend dans la paroi terminale (15) du tenon et aussi à travers le corps de base (14) en tant qu'alésage de passage, toutefois avec un diamètre plus grand dans la zone du corps de base.

6. Assortiment de pièces de construction selon au moins l'une des revendications 1 à 5,
caractérisé en ce que
• le boulon traversant consiste en une vis (31), qui peut être vissée dans un manchon fileté (30) disposé dans l'élément d'adaptation (25), avec un alésage, muni d'un filetage intérieur
• l'alésage prévu dans le corps moulé (24) pour la vis (31) est embrevé pour permettre à la tête de la vis de s'enfoncer, et est élargi pour pouvoir compenser un jeu longitudinal du montant à raccorder par un élargissement de l'alésage (32).

7. Assortiment de pièces de construction selon au moins l'une des revendications 1 à 6,
caractérisé en ce que
le corps moulé (35) présente, dans sa cavité (36), un cône formé au milieu (38), qui est entouré par l'une des extrémités d'une pièce d'angle à 45° (39) équipée à l'autre extrémité d'un tenon (8, 80) et d'une paroi terminale (15)de tenon, la pièce d'angle à 45° présentant une cavité qui peut être fermée par un élément de recouvrement, servant à actionner la vis (10) et à actionner une vis de serrage (40) qui peut être vissée dans un passage fileté du cône (38).

8. Assortiment de pièces de construction selon au moins l'une des revendications 1 à 7,
caractérisé en ce que
celui-ci présente un quatrième élément de liaison qui consiste en une pièce d'angle à 90° (42) avec une cavité (47) qui peut être fermée par un élément de recouvrement qui porte un tenon (8, 80) à une extrémité sur une paroi terminale (15) de tenon et qui peut être relié par l'autre extrémité à un élément d'adaptation (45) présentant une concavité (46) sur le côté arrière pour entourer localement l'enveloppe d'un montant.

9. Assortiment de pièces de construction selon au moins l'une des revendications 1 à 8,
caractérisé en ce que
entre l'embrèvement en forme de gradin (26) de la paroi terminale (15) de tenon et l'extrémité du montant qui s'appuie dessus, on dispose une bague intermédiaire (27) en matière plastique qui sert de recouvrement de la fente.

10. Assortiment de pièces de construction selon au moins l'une des revendications 1 à 9,
caractérisé en ce que
l'élément de recouvrement (370) est réalisé en une matière translucide et peut être éclairé par une source de lumière d'un dispositif d'éclairage placé dans la cavité (36) du corps moulé.

11. Assortiment de pièces de construction selon au moins l'une des revendications 1 à 9,
caractérisé en ce que
l'élément de recouvrement (370) porte selon une disposition intégrée, un bouton-poussoir (371) permettant de faire arrêter à volonté l'autobus.
